# FASCICULE DE BREVET EUROPEEN

(11) **EP 3 583 669 B1**
(45) Date de publication et mention de la délivrance du brevet: **29.09.2021**
(21) Numéro de dépôt: 18707400.0
(22) Date de dépôt: 15.02.2018
(51) Int. Cl.: H02G 11/02, B65H 75/44

(54) **SYSTEME DE TRANSFERT D'UN LIEN MAGNETIQUE**
SYSTEM ZUR ÜBERTRAGUNG EINER MAGNETISCHEN VERBINDUNG
SYSTEM FOR TRANSFERRING A MAGNETIC LINK

(30) Priorité: 16.02.2017 FR 1751248
(43) Date de publication de la demande: 25.12.2019
(73) Titulaire: Conductix Wampfler France, 01300 Belley (FR)
(72) Inventeur: BERGER, Jean-Michel, 01300 Brens (FR); BESSER, Lars, 79206 Breisach Am Rheim (DE)
(74) Mandataire: Regimbeau
(86) Numéro de dépôt international: PCT/FR2018/050362
(87) Numéro de publication internationale: WO 2018/150139

(56) Documents cités:
- WO-A1-2008/012353
- CA-A- 1 232 590
- FR-A3- 2 865 860
- US-A- 3 822 834

## Description

### DOMAINE DE L'INVENTION

La présente invention concerne un système de transfert d'un lien magnétique entre un premier élément et un second élément mobile en rotation par rapport au premier élément, une première extrémité dudit lien étant adaptée pour être fixée au premier élément et une seconde extrémité du lien étant adaptée pour être fixée au second élément.

### ETAT DE LA TECHNIQUE

Il existe de nombreuses applications industrielles dans lesquelles il est nécessaire de transmettre de l'énergie et/ou des signaux (par exemple, un courant électrique, des signaux optiques, une tension mécanique, un fluide, etc.) par une liaison tournante entre un premier élément et un second élément mobile par rapport au premier élément. Par exemple, le premier élément peut être une armoire fixée au sol, un bâti d'un robot, etc. et le second élément peut être un chariot ou un portique roulant au sol, un bras d'un robot, etc.

L'énergie et/ou les signaux susmentionnés sont transmis par l'intermédiaire d'un câble électrique, d'une fibre optique ou d'un faisceau de fibres optiques, un câble mécanique, un conduit hydraulique ou pneumatique ou de tout autre moyen approprié, généralement désigné dans le présent texte par « élément de transfert d'énergie et/ou de signaux ».

Pour éviter que l'élément de transfert d'énergie ne se déploie de manière désordonnée lors du déplacement du second élément par rapport au premier élément, il est connu de disposer l'élément de transfert d'énergie et/ou de signaux sur un enrouleur monté sur le premier ou le second élément, de sorte à dérouler ou enrouler ledit élément de transfert de manière synchronisée avec le déplacement du second élément.

Le document US 3,822,834 divulgue un système de transfert selon le préambule de la revendication 1, pour un lien non magnétique.

En particulier, la Demanderesse a conçu un système de transfert comprenant deux surfaces ferromagnétiques coaxiales, dans lequel un lien magnétique solidaire de l'élément de transfert d'énergie et/ou de signaux est enroulé sur chacune des deux surfaces et passe de l'une à l'autre au fur et à mesure d'une rotation relative d'une surface par rapport à l'autre. L'attraction magnétique maintient le lien magnétique enroulé contre lesdites surfaces ferromagnétiques ou contre une spire déjà en contact avec lesdites surfaces, afin d'éviter tout déroulement intempestif du lien.

Le document FR 2 865 860 décrit ainsi un système de transfert d'un lien magnétique entre un premier élément et un second élément mobile en rotation par rapport au premier élément, une première extrémité dudit lien étant adaptée pour être fixée au premier élément et une seconde extrémité du lien étant adaptée pour être fixée au second élément, qui comprend un corps et un axe mobile en rotation par rapport au corps, dont l'un est destiné à être rigidement lié au premier élément et l'autre au second élément, de sorte que la rotation du second élément entraîne la rotation relative du corps et de l'axe à la vitesse de rotation du second élément. Le corps et l'axe portent chacun une surface ferromagnétique d'enroulement du lien magnétique, lesdites surfaces étant coaxiales.

Les documents WO 2005/08374 et WO 2008/012353 décrivent des liens magnétiques adaptés à un tel système de transfert. D'une manière générale, ces liens comprennent une bande aimantée présentant une aimantation permanente orientée dans le sens de l'épaisseur de ladite bande, et au moins un élément de transfert d'énergie et/ou de signaux s'étendant le long de la bande aimantée et solidaire de celle-ci.

Cependant, un système de transfert tel que décrit ci-dessus est généralement adapté pour recevoir jusqu'à 90 spires du lien magnétique.

En effet, au-delà d'un tel nombre de spires, l'attraction magnétique devient insuffisante pour plaquer correctement les spires du lien magnétique contre les surfaces ferromagnétiques.

Le problème se pose donc de concevoir un système de transfert qui reste efficace pour un nombre de spires élevé, typiquement supérieur à 90 spires.

Le document FR 2 643 624 décrit un système de transfert d'un lien (non magnétique), qui est constitué d'une bobine fixe, solidaire d'une partie fixe de la liaison tournante, d'une bobine accumulatrice solidaire d'une partie mobile de la liaison tournante, et de deux bobines intermédiaires entraînées en rotation à la moitié de la vitesse de la bobine accumulatrice par un pignon conique. Les bobines intermédiaires permettent de doubler le nombre de tours de la liaison tournante, par rapport à un système constitué uniquement de la bobine fixe et de la bobine accumulatrice. Cependant, un inconvénient de ce système est qu'il présente une structure complexe comprenant des accouplements, des roulements, et un grand nombre de pièces soumises à usure mécanique. Il est donc coûteux à produire et à maintenir. De plus, il est encombrant, notamment dans la direction axiale.

### EXPOSE DE L'INVENTION

Un but de l'invention est donc de concevoir un système de transfert d'un lien magnétique entre un premier élément et un second élément mobile en rotation par rapport au premier élément, et qui permette de contrôler l'enroulement et le déroulement du lien même en présence d'un nombre élevé de spires du lien magnétique. Un tel système doit en outre rester relativement compact par rapport aux systèmes existants, et nécessiter un nombre de composants limité.

A cet effet, l'invention proposée est un système de transfert d'un lien magnétique entre un premier élément et un second élément mobile en rotation par rapport au premier élément, une première extrémité dudit lien étant adaptée pour être fixée au premier élément et une seconde extrémité du lien étant adaptée pour être fixée au second élément, caractérisé en ce qu'il comprend :
- une première partie adaptée pour être rigidement liée au premier élément ;
- une deuxième partie mobile en rotation par rapport à la première partie et adaptée pour être rigidement liée au second élément de sorte à être entraînée en rotation à la vitesse de rotation dudit second élément ;
- une troisième partie mobile en rotation par rapport à la première et à la deuxième partie,
- un organe de couplage de la deuxième et de la troisième partie, adapté pour entraîner en rotation la troisième partie à une vitesse égale à la moitié de la vitesse de rotation du second élément,
- deux ensembles de deux surfaces ferromagnétiques coaxiales d'enroulement du lien magnétique,

un premier ensemble comprenant une première surface solidaire de la première partie et une seconde surface solidaire de la troisième partie,

un second ensemble comprenant une troisième surface solidaire de la deuxième partie et une quatrième surface solidaire de la troisième partie.

Selon le premier mode de réalisation de l'invention, revendiqué dans la revendication indépendante 1, la troisième partie est un axe, la première partie est une première portion de corps, la deuxième partie est une deuxième portion de corps, lesdites portions de corps s'étendant autour de l'axe.

Ledit organe de couplage comprend alors un satellite comprenant un premier moyen de transmission couplé à la deuxième partie et un second moyen de transmission couplé à la troisième partie.

Selon le deuxième mode de réalisation de l'invention, alternatif au premier et revendiqué à la revendication indépendante 2, la première partie est une première portion d'axe, la deuxième partie est une seconde portion d'axe coaxiale avec la première partie, et la troisième partie est un corps s'étendant autour de la première et de la deuxième portion d'axe.

Ledit organe de couplage comprend alors un pignon conique couplé au corps et adapté pour entraîner en rotation ledit corps à une vitesse égale à la moitié de la vitesse de rotation du second élément.

Selon le troisième mode de réalisation de l'invention, alternatif au premier et au deuxième et revendiqué à la revendication indépendante 3, la première partie est une première portion d'axe, la deuxième partie est une seconde portion d'axe coaxiale avec la première partie, et la troisième partie est un corps s'étendant autour de la première et de la deuxième portion d'axe. L'organe couplage comprend alors un satellite comprenant un premier moyen de transmission couplé à la deuxième partie et un second moyen de transmission couplé à la première partie.

Selon le premier mode ou le troisième mode de réalisation, le premier et/ou le second moyen de transmission peut comprendre un engrenage, ou une courroie.

Selon une forme d'exécution de l'invention, le système comprend deux joints tournants assemblés coaxialement comprenant chacun un axe, un corps mobile en rotation par rapport à l'axe, et un ensemble de deux surfaces ferromagnétiques coaxiales d'enroulement du lien magnétique, l'une desdites surfaces étant solidaire de l'axe et l'autre surface étant solidaire du corps. La première partie est respectivement un axe ou un corps d'un premier joint tournant, la deuxième partie est respectivement un axe ou un corps d'un second joint tournant, la troisième partie est formée d'un assemblage rigide respectivement des axes ou des corps des deux joints tournants.

De manière particulièrement avantageuse, le lien magnétique est un ruban plat. Selon une forme d'exécution préférée, le lien magnétique comprend :
- une bande aimantée présentant une aimantation permanente orientée dans le sens de l'épaisseur de ladite bande ;
- au moins un élément de transfert d'énergie et/ou de signaux s'étendant le long de la bande aimantée ; et
- un matériau d'enrobage lié à la bande aimantée et enveloppant chaque élément de transfert d'énergie et/ou de données.

La liaison entre le matériau d'enrobage et la bande aimantée peut être assurée par un adhésif.

Selon un mode de réalisation, l'élément de transfert d'énergie et/ou de signaux est une fibre optique.

Selon un mode de réalisation, la bande aimantée est subdivisée en tronçons longitudinaux successifs.

De manière particulièrement avantageuse, chaque ensemble de deux surfaces magnétiques est apte à recevoir entre 10 et 90 spires du lien magnétique.

### DESCRIPTION DES FIGURES

D'autres caractéristiques et avantages ressortiront de la description détaillée qui va suivre, en référence aux dessins annexés sur lesquels :
- les figures 1A à 1C sont des vues d'un système de transfert selon un premier mode de réalisation de l'invention,
- les figures 2A et 2B sont des vues d'un système de transfert selon un deuxième mode de réalisation de l'invention,
- les figures 3A à 3C sont des vues d'un système de transfert selon un troisième mode de réalisation de l'invention,
- les figures 4A et 4B sont des vues en coupe transversale et longitudinale d'un lien magnétique susceptible d'être utilisé dans un système de transfert selon l'invention.

### DESCRIPTION DETAILLEE DE MODES DE REALISATION DE L'INVENTION

Le système de transfert d'un lien magnétique selon l'invention peut prendre différentes formes dont trois modes de réalisation particuliers mais non limitatifs seront décrits plus bas.

De manière connue en elle-même, le lien magnétique présente une première extrémité adaptée pour être fixée au premier élément et une seconde extrémité adaptée pour être fixée au second élément.

Les premier et second éléments peuvent être tout élément utilisable dans l'industrie.

Par exemple, le premier élément peut être : un bâti de machine-outil, la structure d'une grue, le génie civil d'une installation portuaire, le bâti d'un pont roulant, un capot d'étanchéité, etc. L'élément mobile peut être notamment : une bobine, un bras robotisé, une glissière de machine-outil, un arbre de réducteur, un joint tournant, la partie mobile d'un collecteur électrique, etc. Ces listes ne sont bien sûr pas limitatives.

Le lien magnétique peut notamment être un lien tel que décrit dans les documents WO 2005/08374 et WO 2008/012353, auquel on pourra se référer pour une description détaillée.

De préférence, le lien magnétique se présente sous la forme d'un ruban plat, cette forme favorisant un enroulement régulier du lien sur les surfaces ferromagnétiques.

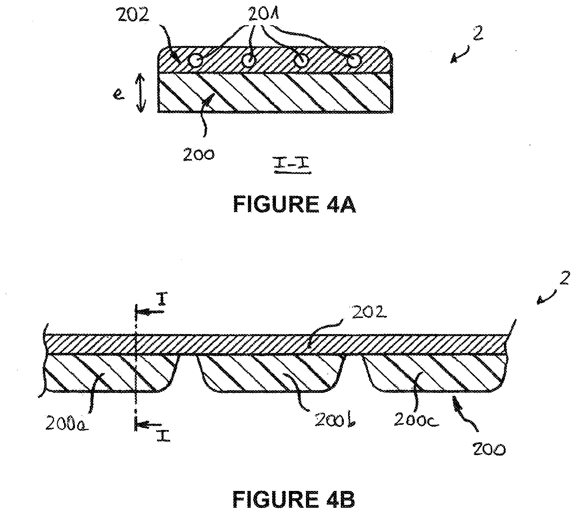

Selon une forme d'exécution préférée illustrée sur les figures 4A et 4B, le lien magnétique 2 comprend :
- une bande aimantée 200 présentant une aimantation permanente orientée dans le sens de l'épaisseur (notée e) de ladite bande ;
- au moins un élément 201 de transfert d'énergie et/ou de signaux s'étendant le long de la bande aimantée 200 ; et
- un matériau d'enrobage 202 lié à la bande aimantée 200 et enveloppant chaque élément 201 de transfert d'énergie et/ou de données.

La bande aimantée peut être constituée d'un matériau élastomère dans lequel sont incorporées des particules lui communiquant une aimantation permanente orientée dans le sens de son épaisseur.

Selon un mode de réalisation, la liaison entre le matériau d'enrobage 202 et la bande aimantée 200 est assurée par un adhésif (non représenté). Ledit adhésif peut par exemple être une colle, un film adhésif double face, etc.

Selon une application particulière de l'invention, l'élément de transfert d'énergie et/ou de signaux est une fibre optique.

De manière particulièrement avantageuse, comme exposé dans le document WO 2008/012353, la bande aimantée 200 est subdivisée en tronçons longitudinaux successifs 200a, 200b, 200c. Ces différents tronçons, dont la longueur est bien inférieure à la longueur totale du lien, permettent d'éviter que, lors de changements dimensionnels dus notamment à des variations de température, les forces de cisaillement générées entre la bande aimantée et le matériau d'enrobage soient suffisamment fortes pour provoquer un décollement entre ces deux éléments. En effet, les entailles pratiquées dans la bande aimantée pour délimiter les différents tronçons permettent de relâcher les contraintes de cisaillement entre le matériau d'enrobage et la bande aimantée.

Naturellement, l'homme du métier pourra concevoir le lien en fonction de l'application visée et des contraintes qui s'y rapportent, et adapter l'enseignement des documents WO 2005/08374 et WO 2008/012353, sans pour autant sortir du cadre de la présente invention.

D'une manière générale, le système de transfert du lien comprend :
- une première partie adaptée pour être rigidement liée au premier élément ;
- une deuxième partie mobile en rotation par rapport à la première partie et adaptée pour être rigidement liée au second élément de sorte à être entraînée en rotation à la vitesse de rotation dudit second élément ;
- une troisième partie mobile en rotation par rapport à la première et à la deuxième partie,
- un organe de couplage de la deuxième et de la troisième partie, adapté pour entraîner en rotation la troisième partie à une vitesse égale à la moitié de la vitesse de rotation du second élément,
- deux ensembles de deux surfaces ferromagnétiques coaxiales d'enroulement du lien magnétique,

un premier ensemble comprenant une première surface solidaire de la première partie et une seconde surface solidaire de la troisième partie,
un second ensemble comprenant une troisième surface solidaire de la deuxième partie et une quatrième surface solidaire de la troisième partie.

Selon un mode de réalisation, l'organe de couplage comprend un satellite comprenant un premier moyen de transmission couplé à la deuxième partie et un second moyen de transmission couplé à la troisième partie. A cet effet, tout moyen de transmission peut être employé, tel qu'une courroie, une chaîne, un engrenage, etc.

Selon un autre mode de réalisation, dans le cas où la troisième partie forme le corps du système de transfert et les première et seconde parties forment deux portions d'axe coaxiales, l'une étant liée au premier élément et l'autre au second élément, l'organe de couplage comprend un pignon conique couplé audit corps et adapté pour entraîner en rotation ledit corps à une vitesse égale à la moitié de la vitesse de rotation du second élément.

Les deux surfaces ferromagnétiques de chaque ensemble sont coaxiales et en regard l'une de l'autre dans la direction radiale. Les deux surfaces ferromagnétiques solidaires de la troisième partie, qui appartiennent respectivement au premier ensemble et au second ensemble de surfaces ferromagnétiques, sont coaxiales mais distantes l'une de l'autre dans la direction axiale.

Ainsi, lors du déplacement du second élément par rapport au premier élément, le lien se déplace entre les surfaces ferromagnétiques coaxiales solidaires de la première partie et de la deuxième partie par l'intermédiaire des surfaces ferromagnétiques solidaires de la troisième partie.

Si les deux ensembles de surfaces ferromagnétiques présentent les mêmes dimensions et acceptent donc le même nombre de spires, le système selon l'invention permet ainsi de doubler le nombre de spires du lien par rapport à un joint tournant comprenant un seul desdits ensembles de surfaces magnétiques.

Par ailleurs, comme exposé en détail plus bas, l'accouplement des différentes parties du système est réalisé au moyen d'un faible nombre de pièces et est ainsi plus robuste que le système décrit dans le document FR 2 643 624.

Il est à noter qu'un tel système de transfert peut être spécifiquement conçu et fabriqué suivant la définition qui précède. Ceci permet notamment d'optimiser la conception des différents composants et leur assemblage.

De manière alternative, ledit système de transfert de lien peut être formé en assemblant deux joints tournants connus, tels que décrits dans le document FR 2 865 860, chacun de ces joints tournants comprenant un axe, un corps mobile en rotation par rapport à l'axe, et un ensemble de deux surfaces ferromagnétiques coaxiales d'enroulement du lien magnétique, l'une desdites surfaces étant solidaire de l'axe et l'autre surface étant solidaire du corps.

On assemble alors lesdits joints de manière coaxiale, en reliant rigidement les axes des deux joints tournants (le corps d'un joint tournant étant lié au premier élément et le corps de l'autre joint tournant étant lié au second élément) et en entraînant lesdits axes à la moitié de la vitesse de rotation du second élément au moyen d'un organe de couplage desdits axes au corps lié au second élément. Ledit organe de couplage peut être par exemple un satellite comprenant un premier moyen de transmission couplé au corps lié au second élément et un second moyen de transmission couplé à l'ensemble des deux axes.

De manière alternative, on relie rigidement les corps des deux joints tournants (l'axe d'un joint tournant étant lié au premier élément et l'axe de l'autre joint tournant étant lié au second élément) et on les entraîne à la moitié de la vitesse de l'axe du joint tournant lié au second élément au moyen d'un organe de couplage desdits corps à l'axe lié au second élément. Ledit organe de couplage peut être par exemple un pignon conique ou un satellite comprenant un premier moyen de transmission couplé à l'axe lié au second élément et un second moyen de transmission couplé à l'ensemble des deux corps.

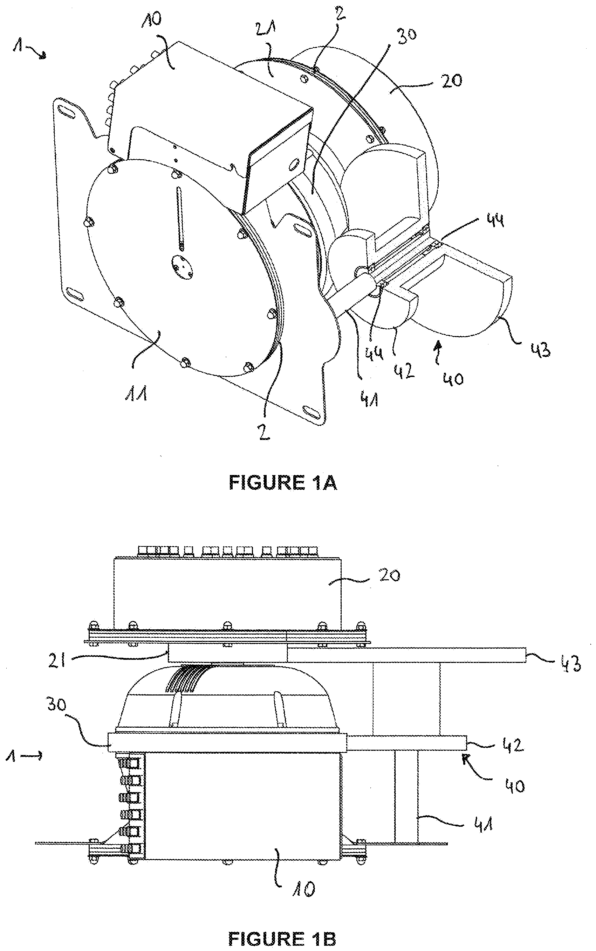

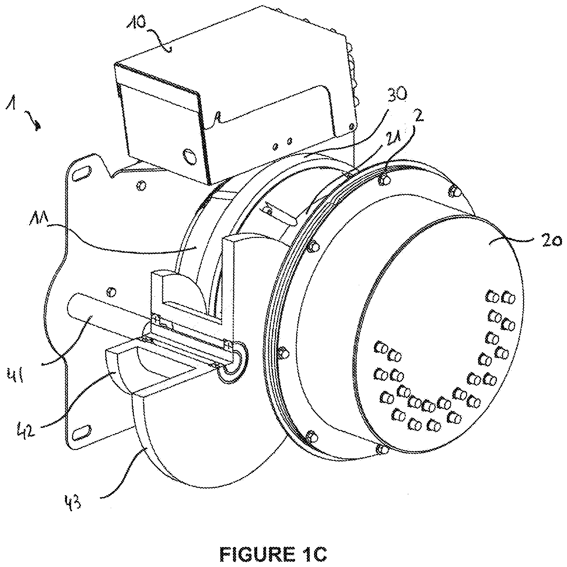

Les figures 1A à 1C illustrent un premier mode de réalisation de l'invention.

Le système 1 de transfert du lien 2 comprend deux portions de corps 11, 21 : la portion 11 est liée au premier élément (non représenté) tandis que la portion 21 est liée au second élément (non représenté). La liaison des portions de corps aux premier et second éléments peut être réalisée par tout moyen approprié, notamment, s'agissant du premier élément : des silentblocs, des vis, des rivets, de la soudure, etc. ; s'agissant du second élément : un accouplement souple, un doigt d'entraînement, un coupleur, des vis, des silentblocs, etc.

Si le premier élément est fixe, la portion de corps 11 est donc fixe, tandis que la portion de corps 21 est entraînée en rotation par le second élément à une vitesse V égale à celle du second élément.

Chaque portion de corps 11, 21 supporte un boîtier respectif 10, 20 de raccordement du ou des éléments de transfert d'énergie et/ou de données portés par le lien magnétique 2 respectivement au premier élément et au second élément.

A l'intérieur des deux portions de corps 11, 21 est agencé un axe 30 mobile en rotation par rapport auxdites portions de corps et coaxial avec celles-ci. Seule une partie de l'axe 30 est visible sur les figures 1A à 1C, mais l'axe 30 s'étend sensiblement sur toute la longueur du système de transfert 1.

Un organe de couplage 40 se présentant sous la forme d'un satellite permet de coupler ledit axe 30 à la portion de corps 21.

Le satellite 40 est monté en rotation libre par l'intermédiaire de roulements 44 sur un axe 41 solidaire du premier élément.

Ledit satellite 40 comprend deux pignons dont l'un (43) est agencé en engrènement avec la portion de corps 21 et l'autre (42) en engrènement avec l'axe 30. Le diamètre des deux pignons 42, 43 est choisi de sorte à procurer un rapport de réduction de 2 entre la portion de corps 21 et l'axe 30. En d'autres termes, l'organe de couplage 40 permet d'entraîner l'axe 30 à une vitesse V/2 égale à la moitié de la vitesse V de la portion de corps 21.

Le mode d'engrènement n'est pas limitatif : il peut s'agir de dents (engrenage), mais aussi de courroies, de chaînes, etc.

Le système 1 comprend deux ensembles de surfaces ferromagnétiques (non visibles sur les figures 1A à 1C) sur lesquelles est enroulé le lien magnétique 2 :
- un premier ensemble de deux surfaces coaxiales et en regard l'une de l'autre dans la direction radiale comprend une surface extérieure solidaire de la portion de corps 11 liée au premier élément, et une surface intérieure solidaire de l'axe 30 ;
- un second ensemble de deux surfaces coaxiales et en regard l'une de l'autre dans la direction radiale comprend une surface extérieure solidaire de la portion de corps 21 liée au second élément, et une surface intérieure solidaire de l'axe 30.

Lors du fonctionnement du système de transfert, le trajet du lien magnétique comprend donc successivement la surface extérieure du premier ensemble, la surface intérieure du premier ensemble, la surface intérieure du second ensemble, la surface extérieure du second ensemble (et inversement dans le cas d'une rotation en sens inverse).

De manière alternative, le système peut comprendre deux liens magnétiques, chacun associé à un ensemble de surfaces coaxiales, les deux liens étant connectés au niveau de l'axe 30.

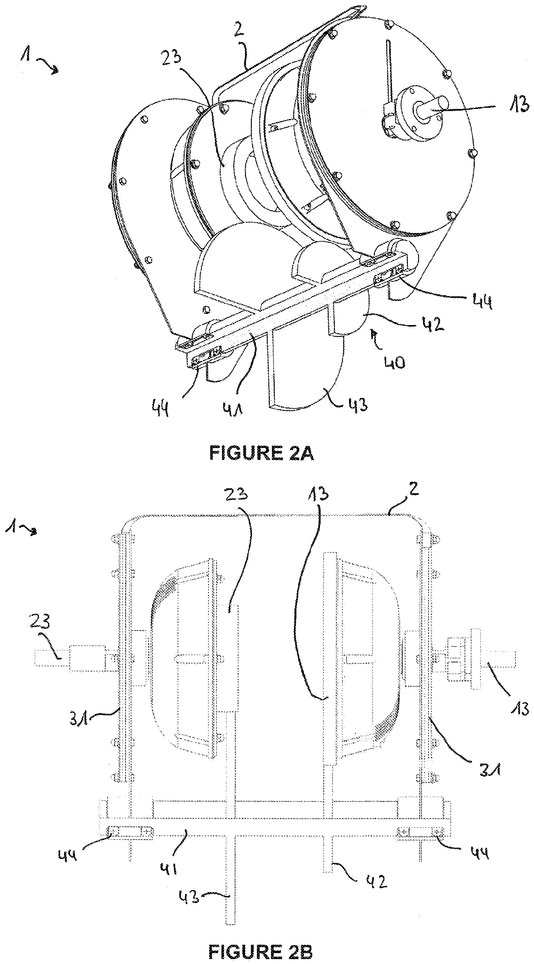

Les figures 2A et 2B illustrent un deuxième mode de réalisation de l'invention.

Le système 1 de transfert du lien 2 comprend deux portions d'axe 13, 23 coaxiales : la portion 13 est liée au premier élément (non représenté) tandis que la portion 23 est liée au second élément (non représenté). La liaison des portions d'axe aux premier et second éléments peut être réalisée par tout moyen approprié, notamment, s'agissant du premier élément : des silentblocs, des vis, des rivets, de la soudure, etc. ; s'agissant du second élément : un accouplement souple, un doigt d'entraînement, un coupleur, des vis, des silentblocs, etc.

Si le premier élément est fixe, la portion d'axe 13 est donc fixe, tandis que la portion d'axe 23 est entraînée en rotation par le second élément à une vitesse V égale à celle du second élément.

Les deux portions d'axe 13, 23 sont agencées dans un corps 31 coaxial avec celles-ci et mobile en rotation par rapport auxdites portions d'axes.

Un organe de couplage 40 se présentant sous la forme d'un satellite permet de coupler ledit corps 31 aux portions d'axe 13, 23.

Le satellite 40 comprend un axe 41 monté en rotation libre par l'intermédiaire de roulements 44 sur le corps 31. Dans la forme d'exécution illustrée sur la figure 2B, le corps 31 est constitué de deux parties rigidement liées par l'axe 41.

Ledit satellite 40 comprend deux pignons s'étendant à partir de l'axe 41, dont l'un (pignon 43) est agencé en engrènement avec la portion d'axe 23 et l'autre (pignon 42) en engrènement avec la portion d'axe 13. Le diamètre des deux pignons 42, 43 est choisi de sorte à procurer un rapport de réduction de 2 entre la portion d'axe 23 et le corps 31. En d'autres termes, l'organe de couplage 40 permet d'entraîner le corps 31 à une vitesse V/2 égale à la moitié de la vitesse V de la portion d'axe 23.

Le mode d'engrènement n'est pas limitatif : il peut s'agir de dents (engrenage), mais aussi de courroies, de chaînes, etc.

Le système 1 comprend par ailleurs deux ensembles de surfaces ferromagnétiques (non visibles sur les figures 2A et 2B) sur lesquelles est enroulé le lien magnétique 2 :
- un premier ensemble de deux surfaces coaxiales et en regard l'une de l'autre dans la direction radiale comprend une surface extérieure solidaire de la portion d'axe 13 liée au premier élément, et une surface intérieure solidaire du corps 31 ;
- un second ensemble de deux surfaces coaxiales et en regard l'une de l'autre dans la direction radiale comprend une surface extérieure solidaire de la portion d'axe 13 liée au second élément, et une surface intérieure solidaire du corps 31.

Lors du fonctionnement du système de transfert, le trajet du lien magnétique comprend donc successivement la surface intérieure du premier ensemble, la surface extérieure du premier ensemble, la surface extérieure du second ensemble, la surface intérieure du second ensemble (et inversement dans le cas d'une rotation en sens inverse).

De manière alternative, le système peut comprendre deux liens magnétiques, chacun associé à un ensemble de surfaces coaxiales, les deux liens étant connectés au niveau du corps 31.

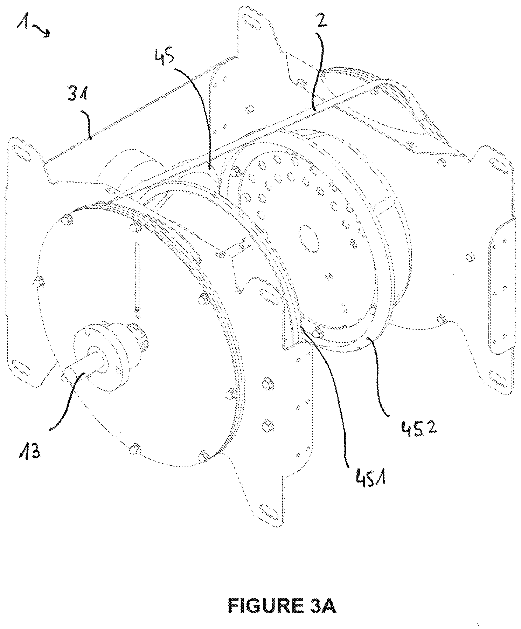

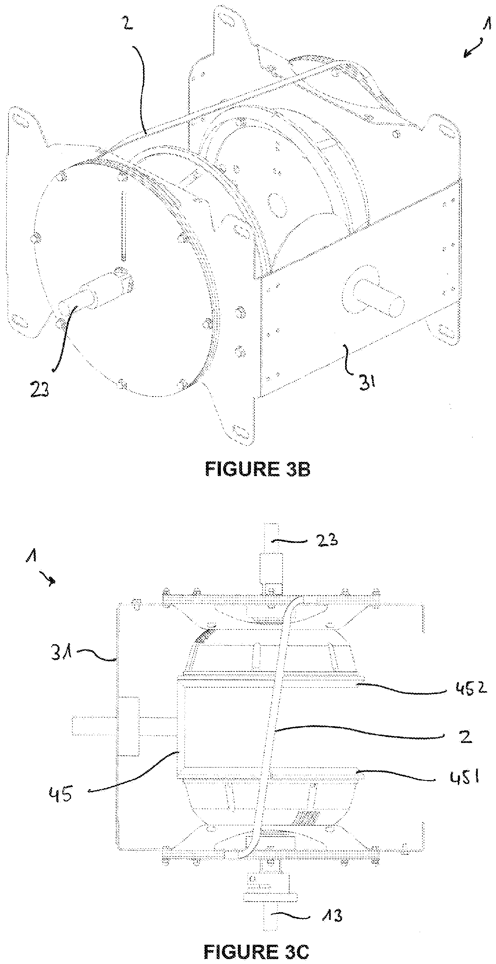

Les figures 3A à 3C illustrent un troisième mode de réalisation de l'invention.

Comme dans le mode de réalisation des figures 2A et 2B, le système 1 de transfert du lien 2 comprend deux portions d'axe 13, 23 coaxiales : la portion 13 est liée au premier élément (non représenté) tandis que la portion 23 est liée au second élément (non représenté). La liaison des portions d'axe aux premier et second éléments peut être réalisée par tout moyen approprié, notamment, s'agissant du premier élément : des silentblocs, des vis, des rivets, de la soudure, etc. ; s'agissant du second élément : un accouplement souple, un doigt d'entraînement, un coupleur, des vis, des silentblocs, etc.

Si le premier élément est fixe, la portion d'axe 13 est donc fixe, tandis que la portion d'axe 23 est entraînée en rotation par le second élément à une vitesse V égale à celle du second élément.

Les deux portions d'axe 13, 23 sont agencées dans un corps 31 coaxial avec celles-ci et mobile en rotation par rapport auxdites portions d'axes.

Un pignon conique 45 est monté rotatif sur le corps 31 et s'engrène avec deux roues coniques 451 et 452 solidaires respectivement des portions d'axe 13 et 23.

Ledit pignon 45 est dimensionné de sorte à procurer un rapport de réduction de 2 entre la portion d'axe 23 et le corps 31. En d'autres termes, le pignon 45 permet d'entraîner le corps 31 en rotation à une vitesse V/2 égale à la moitié de la vitesse V de la portion d'axe 23.

Le système 1 comprend par ailleurs deux ensembles de surfaces ferromagnétiques (non visibles sur les figures 3A à 3C) sur lesquelles est enroulé le lien magnétique 2 :
- un premier ensemble de deux surfaces coaxiales et en regard l'une de l'autre dans la direction radiale comprend une surface intérieure solidaire de la portion d'axe 13 liée au premier élément, et une surface extérieure solidaire du corps 31 ;
- un second ensemble de deux surfaces coaxiales et en regard l'une de l'autre dans la direction radiale comprend une surface intérieure solidaire de la portion d'axe 13 liée au second élément, et une surface extérieure solidaire du corps 31.

Lors du fonctionnement du système de transfert, le trajet du lien magnétique comprend donc successivement la surface intérieure du premier ensemble, la surface extérieure du premier ensemble, la surface extérieure du second ensemble, la surface intérieure du second ensemble (et inversement dans le cas d'une rotation en sens inverse).

De manière alternative, le système peut comprendre deux liens magnétiques, chacun associé à un ensemble de surfaces coaxiales, les deux liens étant connectés au niveau du corps 31.

### REFERENCES

FR 2 865 860
WO 2005/083724
WO 2008/012353
FR 2 643 624

## Revendications

1. Système (1) de transfert d'un lien magnétique (2) entre un premier élément et un second élément mobile en rotation par rapport au premier élément, une première extrémité dudit lien étant adaptée pour être fixée au premier élément et une seconde extrémité du lien étant adaptée pour être fixée au second élément, comprenant :
- une première partie (11, 13) adaptée pour être rigidement liée au premier élément ;
- une deuxième partie (21, 23) mobile en rotation par rapport à la première partie et adaptée pour être rigidement liée au second élément de sorte à être entraînée en rotation à la vitesse de rotation dudit second élément ;
- une troisième partie (30, 31) mobile en rotation par rapport à la première et à la deuxième partie,
ledit système comprend en outre :
- un organe de couplage (40, 45) de la deuxième et de la troisième partie, configuré pour entraîner en rotation la troisième partie à une vitesse égale à la moitié de la vitesse de rotation du second élément,
- deux ensembles de deux surfaces ferromagnétiques coaxiales d'enroulement du lien magnétique (2),
un premier ensemble comprenant une première surface solidaire de la première partie et une seconde surface solidaire de la troisième partie,
un second ensemble comprenant une troisième surface solidaire de la deuxième partie et une quatrième surface solidaire de la troisième partie,
et, en outre, dans ledit système la troisième partie est un axe (30), la première partie est une première portion de corps (11), la deuxième partie est une deuxième portion de corps (21), lesdites portions de corps s'étendant autour de l'axe (30), et l'organe de couplage comprend un satellite (40) comprenant un premier moyen de transmission (43) couplé à la deuxième partie et un second moyen de transmission (42) couplé à la troisième partie.

2. Système (1) de transfert d'un lien magnétique (2) entre un premier élément et un second élément mobile en rotation par rapport au premier élément, une première extrémité dudit lien étant adaptée pour être fixée au premier élément et une seconde extrémité du lien étant adaptée pour être fixée au second élément, comprenant :
- une première partie (11, 13) adaptée pour être rigidement liée au premier élément ;
- une deuxième partie (21, 23) mobile en rotation par rapport à la première partie et adaptée pour être rigidement liée au second élément de sorte à être entraînée en rotation à la vitesse de rotation dudit second élément ;
- une troisième partie (30, 31) mobile en rotation par rapport à la première et à la deuxième partie,
ledit système comprend en outre
- un organe de couplage (40, 45) de la deuxième et de la troisième partie, configuré pour entraîner en rotation la troisième partie à une vitesse égale à la moitié de la vitesse de rotation du second élément,
- deux ensembles de deux surfaces ferromagnétiques coaxiales d'enroulement du lien magnétique (2),
un premier ensemble comprenant une première surface solidaire de la première partie et une seconde surface solidaire de la troisième partie,
un second ensemble comprenant une troisième surface solidaire de la deuxième partie et une quatrième surface solidaire de la troisième partie,
et, en outre, dans ledit système la première partie est une première portion d'axe (13), la deuxième partie est une seconde portion d'axe (23) coaxiale avec la première partie, et la troisième partie est un corps (31) s'étendant autour de la première et de la deuxième portion d'axe (13, 23), et l'organe de couplage comprend un pignon conique (45) couplé au corps (31) et adapté pour entraîner en rotation ledit corps à une vitesse égale à la moitié de la vitesse de rotation du second élément.

3. Système (1) de transfert d'un lien magnétique (2) entre un premier élément et un second élément mobile en rotation par rapport au premier élément, une première extrémité dudit lien étant adaptée pour être fixée au premier élément et une seconde extrémité du lien étant adaptée pour être fixée au second élément, comprenant :
- une première partie (11, 13) adaptée pour être rigidement liée au premier élément ;
- une deuxième partie (21, 23) mobile en rotation par rapport à la première partie et adaptée pour être rigidement liée au second élément de sorte à être entraînée en rotation à la vitesse de rotation dudit second élément ;
- une troisième partie (30, 31) mobile en rotation par rapport à la première et à la deuxième partie,
ledit système comprend en outre :
- un organe de couplage (40, 45) de la deuxième et de la troisième partie, configuré pour entraîner en rotation la troisième partie à une vitesse égale à la moitié de la vitesse de rotation du second élément,
- deux ensembles de deux surfaces ferromagnétiques coaxiales d'enroulement du lien magnétique (2),
un premier ensemble comprenant une première surface solidaire de la première partie et une seconde surface solidaire de la troisième partie,
un second ensemble comprenant une troisième surface solidaire de la deuxième partie et une quatrième surface solidaire de la troisième partie,
et, en outre, dans ledit système la première partie est une première portion d'axe (13), la deuxième partie est une seconde portion d'axe (23) coaxiale avec la première partie, et la troisième partie est un corps (31) s'étendant autour de la première et de la deuxième portion d'axe (13, 23), et l'organe de couplage comprend un satellite (40) comprenant un premier moyen de transmission (43) couplé à la deuxième partie et un second moyen de transmission (42) couplé à la première partie.

4. Système selon l'une des revendications 1 ou 3, dans lequel le premier et/ou le second moyen de transmission comprend un engrenage.

5. Système selon l'une des revendications 1 ou 3, dans lequel le premier et/ou le second moyen de transmission comprend une courroie.

6. Système selon l'une des revendications 1 à 5, comprenant deux joints tournants assemblés coaxialement comprenant chacun un axe, un corps mobile en rotation par rapport à l'axe, et un ensemble de deux surfaces ferromagnétiques coaxiales d'enroulement du lien magnétique, l'une desdites surfaces étant solidaire de l'axe et l'autre surface étant solidaire du corps,
dans lequel la première partie est respectivement un axe ou un corps d'un premier joint tournant, la deuxième partie est respectivement un axe ou un corps d'un second joint tournant, la troisième partie est formée d'un assemblage rigide respectivement des axes ou des corps des deux joints tournants.

7. Système selon l'une des revendications 1 à 6, dans lequel le lien magnétique (2) est un ruban plat.

8. Système selon l'une des revendications 1 à 7, dans lequel le lien magnétique (2) comprend :
- une bande aimantée (200) présentant une aimantation permanente orientée dans le sens de l'épaisseur (e) de ladite bande ;
- au moins un élément (201) de transfert d'énergie et/ou de signaux s'étendant le long de la bande aimantée ; et
- un matériau d'enrobage (202) lié à la bande aimantée (200) et enveloppant chaque élément (201) de transfert d'énergie et/ou de données.

9. Système selon la revendication 8, dans lequel la liaison entre le matériau d'enrobage (202) et la bande aimantée (200) est assurée par un adhésif.

10. Système selon l'une des revendications 8 ou 9, dans lequel l'élément (201) de transfert d'énergie et/ou de signaux est une fibre optique.

11. Système selon l'une des revendications 8 à 10, dans lequel la bande aimantée (200) est subdivisée en tronçons longitudinaux successifs (200a, 200b, 200c).

12. Système selon l'une des revendications 1 à 11, dans lequel chaque ensemble de deux surfaces magnétiques est apte à recevoir entre 10 et 90 spires du lien magnétique (2).

## Patentansprüche

1. Übertragungssystem (1) einer magnetischen Verbindung (2) zwischen einem ersten Element und einem zweiten mobilen Element in Drehung in Bezug auf das erste Element, wobei ein erstes Ende der genannten Verbindung geeignet ist, um am ersten Element befestigt zu sein, und ein zweites Element der Verbindung geeignet ist, um am zweiten Element befestigt zu sein, umfassend:
- einen ersten Teil (11, 13) der geeignet ist, um steif mit dem ersten Element verbunden zu sein;
- einen zweiten Teil (21, 23), der in Drehung in Bezug auf den ersten Teil mobil und geeignet ist, um steif mit dem zweiten Element derart verbunden zu sein, dass er in Drehung in der Drehgeschwindigkeit des genannten zweiten Elements angetrieben ist;
- einen dritten Teil (30, 31), der in Drehung in Bezug auf den ersten und den zweiten Teil mobil ist,
wobei das genannte System weiterhin umfasst:
- ein Kopplungsorgan (40, 45) des zweiten und des dritten Teils, das zum Antreiben in Drehung des dritten Teils in einer Geschwindigkeit gleich der Hälfte der Drehgeschwindigkeit des zweiten Elements ausgestaltet ist,
- zwei Gruppen von zwei ferromagnetischen, koaxialen Flächen zum Aufwickeln der magnetischen Verbindung (2),
wobei eine erste Gruppe eine erste Fläche, die fest mit dem ersten Teil verbunden ist, und eine zweite Fläche, die fest mit dem dritten Teil verbunden ist, umfasst,
wobei eine zweite Gruppe eine dritte Fläche, die fest mit dem zweiten Teil verbunden ist, und eine vierte Fläche, die fest mit dem dritten Teil verbunden ist, umfasst
und darüber hinaus in dem genannten System der dritte Teil eine Achse (30) ist, der erste Teil ein erster Körperabschnitt (11) ist, der zweite Teil ein zweiter Körperabschnitt (21) ist, wobei sich die genannten Körperteile um die Achse (30) erstrecken, das Kopplungsorgan einen Satelliten (40) umfasst, der ein erstes Übertragungsmittel (43), das an den zweiten Teil gekoppelt ist, und ein zweites Übertragungsmittel (42), das an den dritten Teil gekoppelt ist, umfasst.

2. Übertragungssystem (1) einer magnetischen Verbindung (2) zwischen einem ersten Element und einem zweiten in Drehung in Bezug auf das erste Element mobilen Element, wobei ein erstes Ende der genannten Verbindung geeignet ist, um am ersten Element befestigt zu sein, und ein zweites Ende der Verbindung geeignet ist, um am zweiten Element befestigt zu sein, umfassend:
- einen ersten Teil (11, 13), der geeignet ist, um steif mit dem ersten Element verbunden zu sein;
- einen zweiten Teil (21, 23), der mobil in Drehung in Bezug auf den ersten Teil und geeignet ist, um steif mit dem zweiten Element derart befestigt zu sein, dass er in Drehung in der Drehgeschwindigkeit des genannten zweiten Elements angetrieben ist;
- einen dritten Teil (30, 31), der mobil in Drehung in Bezug auf den ersten und den zweiten Teil ist,
wobei das genannte System darüber hinaus umfasst:
- ein Kopplungsorgan (40, 45) des zweiten und des dritten Teils, das zum Antreiben in Drehung des dritten Teils in einer Geschwindigkeit gleich der Hälfte der Drehgeschwindigkeit des zweiten Elements ist,
- zwei Gruppen von zwei ferromagnetischen, koaxialen Flächen zum Aufwickeln der magnetischen Verbindung (2),
wobei eine erste Gruppe eine erste Fläche, die fest mit dem ersten Teil verbunden ist, und eine zweite Fläche, die fest mit dem dritten Teil verbunden ist, umfasst,
wobei eine zweite Gruppe eine dritte Fläche, die fest mit dem zweiten Teil verbunden ist, und eine vierte Fläche, die fest mit dem dritten Teil verbunden ist, umfasst,
und darüber hinaus in dem genannten System der erste Teil ein erster Achsenabschnitt (13) ist, der zweite Teil ein zweiter Achsenabschnitt (23) ist, der koaxial zum ersten Teil ist, und der dritte Teil ein Körper (31) ist, der sich um den ersten und den zweiten Achsenabschnitt (13, 23) erstreckt, und das Kopplungsorgan ein konisches Ritzel (45) umfasst, das an den Körper (31) gekoppelt und zum Antreiben in Drehung des genannten Körpers in einer Geschwindigkeit gleich der Hälfte der Drehgeschwindigkeit des zweiten Elements geeignet ist.

3. Übertragungssystem (1) einer magnetischen Verbindung (2) zwischen einem ersten Element und einem zweiten in Drehung in Bezug auf das erste Element mobilen Element, wobei ein erstes Ende der genannten Verbindung geeignet ist, um am ersten Element befestigt zu sein, und ein zweites Ende der Verbindung geeignet ist, um am zweiten Element befestigt zu sein, umfassend:
- einen ersten Teil (11, 13), der geeignet ist, um steif mit dem ersten Element verbunden zu sein;
- einen zweiten Teil (21, 23), der mobil in Drehung in Bezug auf den ersten Teil und geeignet ist, um steif mit dem zweiten Element derart befestigt zu sein, dass er in Drehung in der Drehgeschwindigkeit des genannten zweiten Elements angetrieben ist;
- einen dritten Teil (30, 31), der mobil in Drehung in Bezug auf den ersten und den zweiten Teil ist,
wobei das genannte System darüber hinaus umfasst:
- ein Kopplungsorgan (40, 45) des zweiten und des dritten Teils, das zum Antreiben in Drehung des dritten Teils in einer Geschwindigkeit gleich der Hälfte der Drehgeschwindigkeit des zweiten Elements ist,
- zwei Gruppen von zwei ferromagnetischen, koaxialen Flächen zum Aufwickeln der magnetischen Verbindung (2),
wobei eine erste Gruppe eine erste Fläche, die fest mit dem ersten Teil verbunden ist, und eine zweite Fläche, die fest mit dem dritten Teil verbunden ist, umfasst,
wobei eine zweite Gruppe eine dritte Fläche, die fest mit dem zweiten Teil verbunden ist, und eine vierte Fläche, die fest mit dem dritten Teil verbunden ist, umfasst,
und darüber hinaus in dem genannten System der erste Teil ein erster Achsenabschnitt (13) ist, der zweite Teil ein zweiter Achsenabschnitt (23) ist, der koaxial zum ersten Teil ist, und der dritte Teil ein Körper (31) ist, der sich um den ersten und den zweiten Achsenabschnitt (13, 23) erstreckt, und das Kopplungsorgan einen Satelliten (40) umfasst, der ein erstes Übertragungsmittel (43), das an den zweiten Teil gekoppelt ist, und ein zweites Übertragungsmittel (42), das an den ersten Teil gekoppelt ist, umfasst.

4. System gemäß einem der Ansprüche 1 oder 3, bei dem das erste und/oder das zweite Übertragungsmittel eine Verzahnung umfasst.

5. System gemäß einem der Ansprüche 1 oder 3, bei dem das erste und/oder das zweite Übertragungsmittel einen Antriebsriemen umfasst.

6. System gemäß einem der Ansprüche 1 bis 5, umfassend zwei koaxial montierte Drehgelenke, die jeweils eine Achse, einen in Bezug auf die Achse in Drehung mobilen Körper und eine Gruppe von zweiten ferromagnetischen, koaxialen Flächen zum Aufwickeln der magnetischen Verbindung umfassen, wobei eine der genannten Flächen mit der Achse fest verbunden ist und die andere Fläche mit dem Körper fest verbunden ist,
wobei der erste Teil jeweils eine Achse oder ein Körper eines ersten Drehgelenks ist, der zweite Teil jeweils eine Achse oder ein Körper eines zweiten Drehgelenks ist, der dritte Teil aus einer steifen Montage jeweils der Achsen oder der Körper der zwei Drehgelenke gebildet ist.

7. System gemäß einem der Ansprüche 1 bis 6, bei dem die magnetische Verbindung (2) ein flaches Band ist.

8. System gemäß einem der Ansprüche 1 bis 7, bei dem die magnetische Verbindung (2) umfasst:
- ein magnetisiertes Band (200), das eine Dauermagnetisierung umfasst, die in der Richtung der Dicke(e) des genannten Bandes ausgerichtet ist;
- wenigstens ein Element (201) zur Energie- und/oder Signalübertragung, das sich entlang des magnetisierten Bandes erstreckt; und
- ein Verkleidungsmaterial (202), das mit dem magnetisierten Band (200) verbunden ist und jedes Element (201) zur Energie- und/oder Datenübertragung einhüllt.

9. System gemäß Anspruch 8, bei dem die Verbindung zwischen dem Verkleidungsmaterial (202) und dem magnetisierten Band (200) durch ein Klebeband gewährleistet ist.

10. System gemäß einem der Ansprüche 8 oder 9, bei dem das Element (201) zur Energie- und/oder Signalübertragung eine Glasfaser ist.

11. System gemäß einem der Ansprüche 8 bis 10, bei dem das magnetisierte Band (200) in drei längliche, aufeinander folgende Teilstücke (200a, 200b, 200c) unterteilt ist.

12. System gemäß einem der Ansprüche 1 bis 11, bei dem jede Gruppe aus zwei magnetischen Flächen geeignet ist, um zwischen 10 und 90 Windungen der magnetischen Verbindung (2) aufzunehmen.

## Claims

1. System (1) for transferring a magnetic link (2) between a first element and a second element rotatable relative to the first element, a first end of said link being adapted to be attached to the first element and a second end of the link being adapted to be attached to the second element, comprising:
- a first part (11, 13) adapted to be rigidly connected to the first element;
- a second part (21, 23) rotatable relative to the first part and adapted to be rigidly connected to the second element so as to be rotationally driven at the rotational speed of said second element;
- a third part (30, 31) rotatable relative to the first and second parts,
said system further comprises:
- a member for coupling (40, 45) the second and third parts, configured to rotationally drive the third part at a speed equal to half the rotational speed of the second element,
- two sets of two coaxial ferromagnetic surfaces for winding the magnetic link (2),
a first set comprising a first surface integral with the first part and a second surface integral with the third part,
a second set comprising a third surface integral with the second part and a fourth surface integral with the third part;
and, furthermore, in said system, the third part is an axle (30), the first part is a first body portion (11), the second part is a second body portion (21), said body portions extending around the axle (30), and the coupling member comprises a satellite (40) comprising a first transmission means (43) coupled to the second part and a second transmission means (42) coupled to the third part.

2. System (1) for transferring a magnetic link (2) between a first element and a second element rotatable relative to the first element, a first end of said link being adapted to be attached to the first element and a second end of the link being adapted to be attached to the second element, comprising:
- a first part (11, 13) adapted to be rigidly connected to the first element;
- a second part (21, 23) rotatable relative to the first part and adapted to be rigidly connected to the second element so as to be rotationally driven at the rotational speed of said second element;
- a third part (30, 31) rotatable relative to the first and second parts,
said system further comprises:
- a member for coupling (40, 45) the second and third parts, configured to rotationally drive the third part at a speed equal to half the rotational speed of the second element,
- two sets of two coaxial ferromagnetic surfaces for winding the magnetic link (2),
a first set comprising a first surface integral with the first part and a second surface integral with the third part,
a second set comprising a third surface integral with the second part and a fourth surface integral with the third part;
and, furthermore, in said system, the first part is a first axle portion (13), the second part is a second axle portion (23) coaxial with the first part, and the third part is a body (31) extending around the first and second axle portions (13; 23), and the coupling member comprises a conical pinion (45) coupled to the body (31) and adapted to rotationally drive said body at a speed equal to half the rotational speed of the second element.

3. System (1) for transferring a magnetic link (2) between a first element and a second element rotatable relative to the first element, a first end of said link being adapted to be attached to the first element and a second end of the link being adapted to be attached to the second element, comprising:
- a first part (11, 13) adapted to be rigidly connected to the first element;
- a second part (21, 23) rotatable relative to the first part and adapted to be rigidly connected to the second element so as to be rotationally driven at the rotational speed of said second element;
- a third part (30, 31) rotatable relative to the first and second parts,
said system further comprises:
- a member for coupling (40, 45) the second and third parts, configured to rotationally drive the third part at a speed equal to half the rotational speed of the second element,
- two sets of two coaxial ferromagnetic surfaces for winding the magnetic link (2),
a first set comprising a first surface integral with the first part and a second surface integral with the third part,
a second set comprising a third surface integral with the second part and a fourth surface integral with the third part;
and, furthermore, in said system, the first part is a first axle portion (13), the second part is a second axle portion (23) coaxial with the first part, and the third part is a body (31) extending around the first and second axle portions (13; 23), and the coupling member comprises a satellite (40) comprising a first transmission means (43) coupled to the second part and a second transmission means (42) coupled to the first part.

4. System according to one of claims 1 or 3, in which the first and/or second transmission means comprises a gearing.

5. System according to one of claims 1 or 3, in which the first and/or second transmission means comprises a belt.

6. System according to one of claims 1 to 5, comprising two rotating joints assembled coaxially each comprising an axle, a body rotatable relative to the axle, and a set of two coaxial ferromagnetic surfaces for winding the magnetic link, one of said surfaces being integral with the axle and the other surface being integral with the body,
in which the first part is respectively an axle or a body of a first rotating joint, the second part is respectively an axle or a body of a second rotating joint, the third part is formed of a rigid assembly respectively of the axles or the bodies of the two rotating joints.

7. System according to one of claims 1 to 6, in which the magnetic link (2) is a flat ribbon.

8. System according to one of claims 1 to 7, in which the magnetic link (2) comprises:
- a magnetised strip (200) having a permanent magnetisation oriented in the direction of the thickness (e) of said strip;
- at least one energy and/or signals transfer element (201) extending along the magnetised strip; and
- a coating material (202) connected to the magnetised strip (200) and enveloping each energy and/or data transfer element (201).

9. System according to claim 8, in which the link between the coating material (202) and the magnetised strip (200) is ensured by an adhesive.

10. System according to one of claims 8 or 9, in which the energy and/or signals transfer element (201) is an optic fibre.

11. System according to one of claims 8 to 10, in which the magnetised strip (200) is subdivided into successive longitudinal sections (200a, 200b, 200c).

12. System according to one of claims 1 to 11, in which each set of two magnetic surfaces is capable of receiving between 10 and 90 turns of the magnetic link (2) .
